# EUROPEAN PATENT APPLICATION

(11) **EP 0 642 017 A1**
(43) Date of publication of application: **08.03.1995**
(21) Application number: 94107798.4
(22) Date of filing: 19.05.1994
(51) Int. Cl.: G01N 30/32, G01N 30/36

(54) **Methods and apparatus for creating a continuous pressure controlled stream of supercritical fluid**

(30) Priority: 07.09.1993 US 117901
(71) Applicant: HEWLETT-PACKARD COMPANY, Palo Alto, California 94304-1181 (US)
(72) Inventor: Haertl, Hans-Georg, D-76227 Karlsruhe (DE)
(74) Representative: Schoppe, Fritz, Dipl.-Ing.

(57) **Abstract**

The control of the flow of a stream of supercritical fluid into a supercritical fluid instrument (100) are disclosed. The present invention provides a system whereby a reciprocating pump (16)is connected to a source of carrier fluid (10) and creates an output stream of supercritical fluid at a set pressure and rate. A pressure transducer (20) is used to create a signal indicative of this pressure prior to its flow through the supercritical fluid instrument (100), and the signal is used to control a pressure regulating valve (22) which is connected to the output stream. The output stream is also connected to the supercritical fluid instrument (100) and this connection is most preferably disposed between the pressure transducer (20) and the pump (16). In this manner, a substantially continuous flow of an output stream of supercritical fluid at a set pressure results. Other embodiments permit a source of liquid modifier to be selectively merged with the supercritical carrier fluid using a second pump (17) and a mixing tee (24). In any embodiment, the pressure control systems disclosed are readily converted into flow control systems by reconfiguring the instrument (100) and the pressure transducer (20) in series. In a preferred embodiment this is accomplished using a set of remotely actuated six port valves (40,42).

## Description

### Field of the Invention

The present invention relates to methods and apparatus for performing analytical chemistry, and more particularly to supercritical fluid chromatography.

### Background of the Invention

In the field of chromatography, the analysis conditions must be carefully controlled in order to obtain repeatable results. One parameter that must be tightly controlled is the mass flow rate of the "mobile phase" or carrier fluid that flows through an instrument, such as a chromatograph column. As well known to those of ordinary skill, there are two general techniques for regulating mass flow rate. One technique involves carefully controlling the fluid flow rate in the system, and is typically used in liquid chromatography. A second technique requires regulating the system pressure and is most frequently used in gas chromatography.

The unique nature of supercritical fluids permit either flow control or pressure control to be used effectively. In fact, it is possible to use a combination of these techniques through the implementation of a controllable variable restrictor. In supercritical fluid applications, flow control is most frequently used in systems with large packed columns, where relatively high flow rates are required. On the other hand, the low flow rates inherent in micropacked and capillary column supercritical fluid chromatographs lend themselves to pressure control.

The pressure control systems found in the prior art typically use a syringe pump. For example, as shown in U.S. Patent No. 4,681,678 -- Leaseburge et al. a syringe pump that provides supercritical fluid to either a supercritical fluid extractor or supercritical fluid chromatograph can be controlled by regulating a flow control valve connected to the syringe pump air supply. The valve controls the amount of air admitted to the syringe and thus maintains the pressure of the output stream above the critical pressure. However, syringe pump systems suffer from several disadvantages, the primary disadvantage being that the syringe must be refilled, resulting in a discontinuous flow. Additionally, the nature of syringe pumps and their associated hardware precludes easily converting such pressure controlled systems to flow controlled systems. As supercritical fluids find their way into more and more applications, this latter disadvantage will become increasingly severe, since different supercritical flow systems will have to be constructed for different types of instruments and applications.

It is also known to control pressure by regulating a high pressure pump in conjunction with flow control as disclosed in U.S. Patent No. 4,871,453 -- Kumar. The disclosed system regulates a pump motor using a pressure transducer disposed between a first output stream and a capillary tube supercritical fluid chromatograph. A second output stream flows through a variable valve that is controlled by a signal generated by a second pressure transducer. The second output stream is merged with the flow exiting the chromatograph. In this manner, the system attempts to control the linear velocity of the carrier fluid as it travels through the capillary tube.

A supercritical fluid extraction system that uses a form of pressure control is disclosed in U.S Patent No. 5,133,859 --Frank et al. The system disclosed uses a pump to create a stream of supercritical fluid that passes through a variable restrictor after it has flowed through an extraction chamber. This type of pressure control is, however, only feasible at relatively high system flowrates. As well known to those of ordinary skill, some forms of supercritical fluid chromatography, particularly capillary tube supercritical fluid chromatography, require relatively low flowrates on the order of microliters per minute. Additionally, supercritical fluid chromatography requires more control over short term variations in flow and pressure than is typically required in supercritical fluid extraction. Thus, the disclosed system cannot be readily adapted to use in some types of supercritical fluid chromatograph.

Thus, there exists a need for a system that provides a relatively low flow in a pressure control mode for capillary columns that is also able to provide a continuous high flow rate for packed columns. It is therefore an object of the present invention to provide such a system that can operate as pressure controlled system yet is easily converted to a flow controlled system using the same hardware. It is an additional object of the present invention to provide a system with high pressurization ramp rates.

### Summary of the Invention

Accordingly, these and other objects of the present invention are met by a supercritical fluid system comprising a source of carrier fluid and a reciprocating pump connected to the source of carrier fluid for creating an output stream of supercritical fluid at a preselected pressure and rate. The output stream flows through a connection connecting the output stream to a pressure transducer that creates a pressure signal indicative of the pressure of the output stream, and this pressure signal is used to control a pressure regulating valve connected to the output stream. The connection also connects the output stream to a supercritical fluid instrument. Preferably, this connection comprises a tee fitting connecting the output stream to both the supercritical fluid instrument and to the pressure transducer.

In certain preferred embodiments of the present invention a filter is placed between the source of carrier fluid and the reciprocating pump and a pulse damper is connected to the output stream between the reciprocating pump and the instrument. Also, in certain preferred embodiments a recirculating loop is provided which connects the output from the pressure regulating valve back to the source of carrier fluid, upstream from the pump, so that the fluid may be reused in the system. By reconfiguring the disclosed system to place the instrument in series with the pressure transducer such that the pressure is measured at the outlet of the instrument, a flow control system is also provided. Finally, certain embodiments also provide a source of liquid modifier that is connected to a second pump that creates a liquid modifier stream that is preferably selectively merged with the output stream of supercritical carrier fluid. In any of these embodiments, the selective connections between the sources of carrier fluid and liquid modifier, as well as the flow path of the output stream, are preferably provided by a multiple port valve. In any embodiment, the multiple port valves may also be used to effectuate the reconfiguration of the flow paths from pressure control to flow control systems.

The present invention also discloses methods of controlling the flow of the stream of supercritical fluid into a supercritical fluid instrument that comprise the steps of providing a source of carrier fluid and compressing this carrier fluid with a reciprocating pump to create an output stream of supercritical fluid at a setpoint pressure and flowrate. Next, a pressure signal indicative of the pressure of the output stream is created at the same time the output stream flows into a supercritical fluid instrument. The output stream is connected to both the supercritical fluid instrument and to a pressure transducer for measuring the pressure of the output stream and generating a pressure signal that is used to operate a control valve. In this manner, a continuous flow is provided at the output stream pressure at a substantially constant mass flow rate. The mass flow rate is determined by system pressure, which is controlled, and the restriction within the instrument provided, for example, by the chromatographic column and a restrictor disposed at the column outlet.

### Brief Description of the Drawings

FIG. 1 is a schematic representation of a preferred embodiment of the pressure control system of the present invention.

FIG. 2 depicts a system as shown in FIG. 1 that has been converted to a flow control system with downstream pressure control.

FIG. 3 illustrates a flow control system used with a modifier.

FIG. 4 is a schematic representation of a flow control system that provides a liquid modifier and that uses two multiple port valves to control the flow paths.

FIG. 5 illustrates the apparatus of FIG. 4 reconfigured into a pressure control system that uses a stream of carrier fluid without modifiers.

### Detailed Description of the Preferred Embodiments

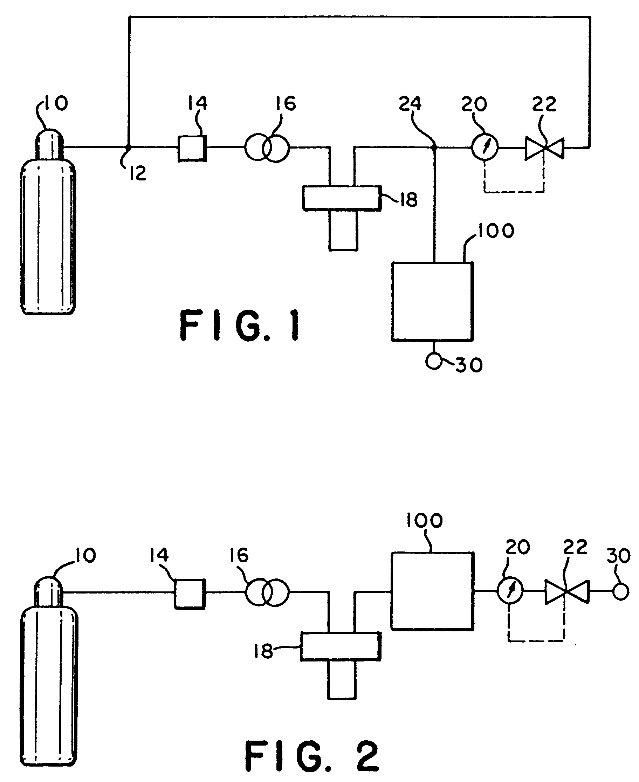

Referring now to FIG. 1, there is shown a preferred embodiment of the flow system of the present invention configured to provide a pressure controlled flow of supercritical carrier fluid to an instrument 100, such as a supercritical fluid chromatograph. It will be understood that the instrument 100 includes typical components, such as the injector, column and detector that are found in such instruments. A source of carrier fluid 10 is provided and is connected to a reciprocating pump 16. In certain embodiments, however, the pump 16 is part of the instrument 100 itself. A typical carrier fluid is carbon dioxide, although many other carrier fluids are useful in supercritical systems. Preferably, a filter 14 is interposed between the source of carrier fluid 10 and the pump 16 to ensure that no particulates or other foreign matter interferes with the operation of the carrier fluid pump 16. As will be discussed below, this feature of the present invention is also important in those embodiments where unused carrier fluid is repressurized via a recirculation loop. The filter 14 ensures that the carrier fluid delivered via such a recirculation loop is free of any contamination introduced during its travel through the valves and other hardware associated with the system.

The reciprocating pump 16 used in the present invention to pressurize the carrier fluid to a supercritical state provides several advantages over the syringe pumps found in prior art systems. The main advantage is that the reciprocating pump 16 provides a continuous flow. However, as discussed in further detail below, the reciprocating pump 16 also permits the specification of a relatively high flow rate, for example about 5.0 ml/minute for supercritical CO2, and therefore permits the hardware of the present invention to be easily reconfigured into a flow controlled system, as depicted in FIG. 2 and discussed in further detail below. In certain embodiments, the output stream of the reciprocating pump 16 is connected to a pulse damper 18 that substantially removes any pressure ripple created by the reciprocating pump 16.

In order to control the pressure of the output stream of the reciprocating pump 16, a pressure transducer 20 is disposed downstream of the pump 16. As will be understood by those of ordinary skill, the pressure transducer 20 creates an output signal that is indicative of the pressure of a stream of fluid at a particular location. In the embodiment illustrated in FIG. 1, the pressure transducer 20 is located downstream from the point where the flow is diverted to the instrument 100, however, other locations may be chosen, so long as the pressure of the output stream is accurately measured prior to its flowing into the instrument 100. An outlet 30 permits fluids to exit the instrument 100.

Referring still to FIG. 1, as shown by the dashed line, the pressure signal created by the pressure transducer 20 is connected to a pressure regulating valve 22. The pressure signal controls the degree to which the pressure regulating valve 22 is opened and thereby causes it to regulate the pressure to a selected setpoint pressure. As will be readily understood by those of ordinary skill, the pressure regulating valve 22 may in some instances be replaced by a variable orifice nozzle such as that disclosed in U.S. Patent No. 5,009,778--Nickerson, which is incorporated herein by reference.

The pressure regulation described above is most preferably carried out downstream of a tee junction 24 that connects the output stream to a supercritical fluid instrument 100. The portion of the output stream not diverted into the supercritical fluid instrument 100 flows through the pressure regulating valve 22 and afterwards, it may either be collected or, preferably, may be recirculated. As illustrated in FIG. 1, the flow from the pressure regulating valve 22 is preferably carried by a recirculating loop to a second tee junction 12 that is upstream of the pump 16 and, most preferably, also upstream from the filter 14. Since the carrier fluid in the feedback loop has flowed through several valves and other pieces of apparatus, it is likely that particles worn from these devices have accumulated in the stream, and these are removed by the filter 14. In any event, the carrier fluid in the feedback loop is reintroduced to the reciprocating pump 16 and is typically mixed with fresh carrier fluid flowing from the source of carrier fluid 10 and repressurized to critical pressure.

Thus, in a "pressure control" mode of operation, the carrier fluid flows first at the pressure within the source, i.e, tank pressure. The pressure is increased by actuating the reciprocating pump 16 while the pressure regulating valve 22 is closed. The pump rate can be selected to be high relative to the system volume so that the ramp rate to supercritical pressure at the system temperature is high, i.e., relatively rapid pressurization occurs. Once the desired pressure is reached, the pump flow rate is set to a value that is above the desired flow rate into the supercritical fluid chromatograph 100 or the like, and the pressure of the output stream is controlled by the operation of the regulating valve 22 as described above.

Referring now to FIG. 2, there is shown a schematic representation of a flow system that has been reconfigured from the system disclosed in FIG. 1 to provide flow control. Those of ordinary skill will appreciate that the systems shown in FIGS. 1 and 2 use the same components, however, the instrument 100 will preferably use a packed column, as opposed to the capillary column preferably used in the pressure control system of FIG. 1. In the embodiment illustrated in FIG. 2, the instrument 100 is directly connected to the flow stream, preferably to the output of the pulse damper 20, and the pressure transducer 20 is connected to the outlet of the instrument 100. The flow rate of the system is controlled by the pump 16. The pressure measured by the pressure transducer 20 is a reduced pressure due to the pressure losses caused by the instrument, and by varying the degree to which the valve 22 is opened. The outlet of the control valve 22 is preferably connected to an exhaust port 30.

Thus, the pressure control system shown in FIG. 1 is easily reconfigured into a flow control system as shown in FIG. 2 by changing the connections to the inlet and outlet of the instrument 100. Those of ordinary skill will realize that there are many ways to accomplish this task, including using quick disconnect fittings or a set of multiple port valves. In those embodiments such as the embodiment depicted in FIG. 2 where the pressure transducer 20 is located downstream from the pump 16, a second pressure transducer may be disposed near the pump 16 to prevent an overpressure condition caused, for example, by excessive restriction within the instrument 100.

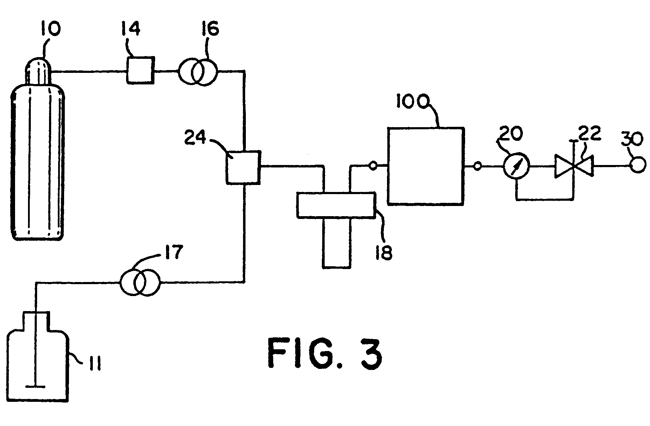

The present invention may also be configured as a two pump system capable of producing mobile phase composition gradients in a flow control mode. FIG. 3 discloses a flow controlled system wherein the instrument 100 and the pressure transducer 20, respectively, are connected in series to the output stream of the mixing tee 24, preferably downstream of a pulse damper 18.

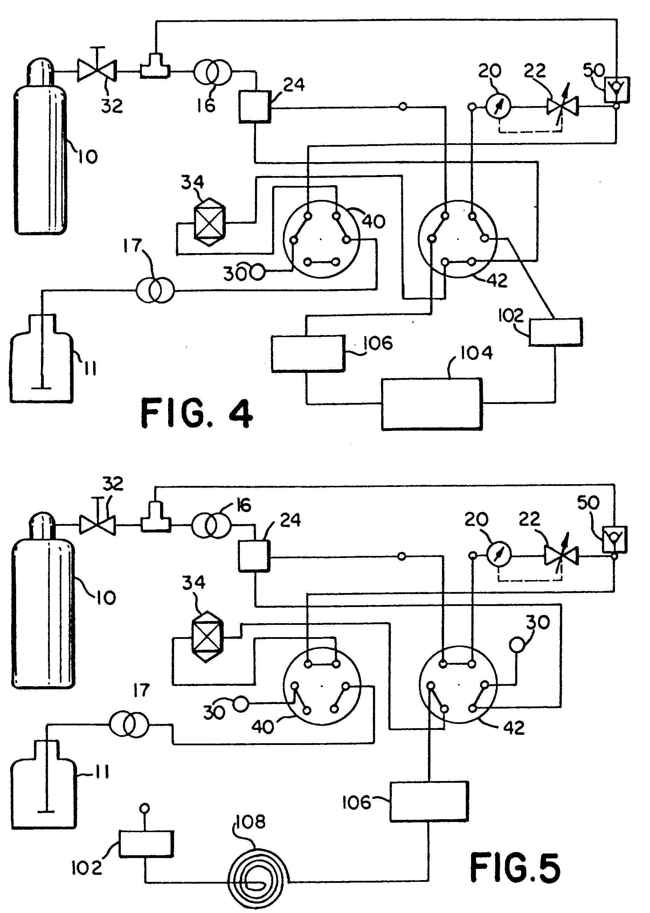

Another preferred embodiment for a configuration of the apparatus of the present invention is shown in FIGS. 4-5. A two pump, flow control system is shown in FIG. 4 and is converted into a one pump, pressure control system shown in FIG. 5, preferably by using six port, two position high pressure valves 40,42, that allow for complete automation of the switching. FIGS. 4-5 also show a more complete schematic of the system including optional equipment such as a flow sensor 34 and a tank valve 32 that switches off the flow of the carrier fluid in case of power failure.

In the system shown in FIG. 4, the source of carrier fluid 10 is connected to a mixing tee 24 where it is mixed with the liquid modifier, and the outlet of the mixing tee 24 is preferably connected to the second six port valve 42, which is set to a position whereby the fluid flows to an injector 106, to a packed column 104 and into a detector 102. From the detector 102, the fluid flows through the second six port valve 42 into the pressure transducer 20 and its associated control valve 22 or, alternatively, a nozzle with a variable orifice. The outlet of the control valve 22 is connected to a check valve 50 that diverts the flow to the first six port valve 40, which is in a position whereby the flow is routed to an exhaust outlet 30 or which connects the carrier fluid to a feedback loop, as described above, to permit its repressurization. The source of liquid modifier 11 is connected to the first six port valve 40 and is routed through a flow sensor 34 to the second six port valve 42, from which the flow is directed to the mixing tee 24, where the modifier is mixed with the carrier fluid. As explained above, the merged flow stream is transferred to the injector 106 by the second six port valve 42, and follows the route described above.

Thus, in the embodiment of FIG. 4, the system is a two pump, flow control system, since the flow of the merged stream of carrier fluid and liquid modifier first flows through an instrument, i.e, the injector 106, packed column 104 and detector 102, and then flows through the pressure transducer 20 and its associated control valve 22.

The flow of carrier fluid in the reconfigured system shown in FIG. 5 is directed into the mixing tee 24, however, the liquid modifier 11 is isolated from the mixing tee 24 by the position of the first six port valve 40. The liquid modifier pump 17 is inactivated. The system shown in FIG. 5 thus only utilizes the output stream of the carrier fluid pump 16, and this stream flows through the mixing tee 24. From the mixing tee 24 the carrier fluid first flows through the second six port valve 42 to the pressure transducer 20 and its associated control valve 22 or variable orifice nozzle. The check valve 50 then directs the flow to the first six port valve 40, through he flow sensor 34 and through another set of ports in the second six port valve 42. From the second six port valve 42 the carrier fluid is directed into an injector 106 that is coupled to a chromatographic column, such as the capillary column 108 shown and finally to a detector 102. In the embodiment illustrated, a capillary column 108, and a gas chromatograph-type detector 102 are preferably used. It should be noted that the packed column 104 and detector 102 used in the apparatus in FIG. 4 could be used in the system illustrated in FIG. 5; however, since the system is a pressure control system, a capillary column 108 represents a preferred embodiment.

Although certain embodiments of the present invention have been set forth and described above with particularity, these embodiments are provided for purposes of illustration only and are not meant to be limiting. The concepts of the present invention will find wide application in a variety of flow systems that, although structurally different form those described herein, will utilize the spirit of the present invention. Those of ordinary skill will realize that numerous adaptations and modifications to the embodiments described herein are readily made and implemented. For example, numerous combinations of multiple port valves and flow path routings could be implemented to provide systems that perform in the same manner as those described above. Accordingly, reference should be made to the appended claims in order to determine the true scope of the present invention.

## Claims

1. A supercritical fluid system comprising: a source of carrier fluid (10); a reciprocating pump (16) connected to the source of carrier fluid (10) for creating an output stream of supercritical fluid at a regulated pressure and fluid flow rate; a supercritical fluid instrument (100) connected to the output stream; a pressure transducer (20) for creating a pressure signal indicative of the pressure of the output stream Characterized by locating the transducer at a point before the output stream flows through the supercritical fluid instrument; and a pressure regulating valve (22) connected to the output stream, wherein the valve controlled by the pressure signal maintains the output stream at the regulated pressure.

2. The system of claim 1, wherein the instrument (100) comprises a chromatograph.

3. The system of claim 1, further comprising a filter (14) disposed between the source of carrier fluid (10) and the reciprocating pump (16).

4. The system of claim 1, further comprising a pulse damper (18) disposed between the reciprocating pump (16) and the supercritical fluid instrument (100).

5. The system of claim 1, further comprising a recirculating loop connecting the outlet (30) of the pressure regulating valve (22) and the source of carrier fluid (10).

6. The apparatus of claim 1, further comprising at least one multiple port valve (40,42).

7. The apparatus of claim 6, comprising a first and a second multiple port valve (40,42) for selectively connecting an output stream comprising at least one of: an output stream of supercritical fluid and a modifier output stream, to both the pressure transducer (20) and the supercritical fluid instrument (100).

8. The apparatus of claim 7 wherein the supercritical fluid instrument (100) is connected to the output stream and comprises an outlet (30), and the pressure transducer (20) is connected to the supercritical fluid instrument outlet (30).

9. The apparatus of claim 7, wherein the pressure transducer (20)and the supercritical fluid instrument (100) are each connected to the output stream.

10. The apparatus of claim 6, wherein the multiple port valve (40,42) comprises at least two positions to redirect the output stream to selectively reconfigure the system from a pressure control system to a flow control system.
